(19) Europäisches Patentamt
European Patent Office
Office européen des brevets

(11) **EP 4 506 768 A1**

(12) **EUROPEAN PATENT APPLICATION**
published in accordance with Art. 153(4) EPC

(43) Date of publication:
**12.02.2025 Bulletin 2025/07**

(21) Application number: **23811556.2**

(22) Date of filing: **27.04.2023**

(51) International Patent Classification (IPC):
***G05B 23/02*** (2006.01)

(52) Cooperative Patent Classification (CPC):
**G05B 23/02**

(86) International application number:
**PCT/JP2023/016650**

(87) International publication number:
**WO 2023/228678 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.05.2022 JP 2022085339**

(71) Applicant: **Mitsubishi Heavy Industries, Ltd.
Tokyo 100-8332 (JP)**

(72) Inventors:
• **FUKADA, Wataru
  Tokyo 100-8332 (JP)**
• **URAKATA, Yuichiro
  Tokyo 100-8332 (JP)**
• **NISHIMURA, Koji
  Tokyo 100-8332 (JP)**
• **KIZU, Tetsuya
  Tokyo 100-8332 (JP)**
• **AOTA, Hiromi
  Takasago-shi, Hyogo 676-8686 (JP)**
• **KUBO, Hiroyoshi
  Tokyo 100-8332 (JP)**

(74) Representative: **Henkel & Partner mbB
Patentanwaltskanzlei, Rechtsanwaltskanzlei
Maximiliansplatz 21
80333 München (DE)**

(54) **FACILITY ABNORMALITY DETERMINATION DEVICE, ABNORMALITY DETERMINATION SYSTEM, ABNORMALITY DETERMINATION METHOD, CONTROL METHOD FOR ABNORMALITY DETERMINATION SYSTEM, AND ABNORMALITY DETERMINATION PROGRAM**

(57)    According to the present invention, an abnormality determination device determines abnormalities in a facility in which a sequence control is implemented for conducting a plurality of events in order. The present device calculates an event interval between a first event and a second event, and an evaluation index of the similarity of data to be analyzed including at least one process data with respect to normal data. The evaluation index is compared with a preset threshold, and thus whether the facility is abnormal is determined.

FIG. 5

EP 4 506 768 A1

## Description

Technical Field

The present disclosure relates to an anomaly determination device of a facility, an anomaly determination system, an anomaly determination method, a control method for an anomaly determination system, and an anomaly determination program.

The present application claims the right of priority based on Japanese Patent Application No. 2022-085339 filed with the Japan Patent Office on May 25, 2022, the content of which is incorporated herein by reference.

Background Art

For example, facilities such as a thermal power generation boiler or a coal gasification combined power generation plant (IGCC) are responsible for power supply to social infrastructures, and the influence of a decrease in operation rate due to a failure is large. Therefore, it is required to determine this type of problem in the facility as anomaly at an early stage. For example, in PTL 1, a presence range of a normal case is decided based on normal learning data selected from data acquired by a sensor provided in a facility, and an anomaly determination of the facility is made based on a degree of deviation between the newly acquired observation data and the presence range of the normal case.

Citation List

Patent Literature

[PTL 1] Japanese Patent No. 5538597

Summary of Invention

Technical Problem

In general, the control of the facility is performed for each event, and in PTL 1, since with respect to the observation data acquired by the sensor provided in the facility, the anomaly determination is performed based on the degree of deviation from the presence range of the normal case, the anomaly determination at the time of the event occurrence can be performed. However, in a facility which performs sequence control in which a plurality of events for causing the facility to execute a series of operations are issued in order, the plurality of events are performed in cooperation with each other, and there is a case where an event in the rear is affected by a failure due to an event in the front. In PTL 1, since the influence of the event issued in such a sequence is not taken into consideration, it is difficult to perform the anomaly determination in the facility in which the sequence control is performed with sufficient accuracy.

At least one embodiment of the present disclosure has been made in view of the circumstances described above, and an object thereof is to provide an anomaly determination device of a facility, an anomaly determination system, an anomaly determination method, a control method for an anomaly determination system, and an anomaly determination program, in which it is possible to suitably determine anomaly that may occur in the facility.

Solution to Problem

In order to solve the above problem, according to at least one embodiment of the present disclosure, there is a provided an anomaly determination device of a facility in which a plurality of events are issued in order, the anomaly determination device including:

an event interval acquisition unit that acquires an event interval with respect to a first event and a second event included in the plurality of events;
a process data acquisition unit that acquires at least one piece of process data of the facility;
an evaluation index calculation unit that calculates an evaluation index of a degree of similarity to normal data with respect to analysis target data including the event interval and the process data; and
an anomaly determination unit that determines presence or absence of anomaly of the facility by comparing the evaluation index with a threshold value set in advance.

In order to solve the above problem, according to at least one embodiment of the present disclosure, there is provided an anomaly determination method of a facility in which a plurality of events are issued in order, the method including:

a step of acquiring an event interval with respect to a first event and a second event included in the plurality of events;
a step of acquiring at least one piece of process data of the facility;
a step of calculating an evaluation index of a degree of similarity to normal data with respect to analysis target data including the event interval and the process data; and
a step of determining presence or absence of anomaly of the facility by comparing the evaluation index with a threshold value set in advance.

In order to solve the above problem, according to at least one embodiment of the present disclosure, there is provided an anomaly determination program of a facility in which a plurality of events are issued in order, the program causing a computer to execute:

a step of acquiring an event interval with respect to a first event and a second event included in the plurality of events;

a step of acquiring at least one piece of process data of the facility;

a step of calculating an evaluation index of a degree of similarity to normal data with respect to analysis target data including the event interval and the process data; and

a step of determining presence or absence of anomaly of the facility by comparing the evaluation index with a threshold value set in advance.

In order to solve the above problem, according to at least one embodiment of the present disclosure, there is provided an anomaly determination system which includes an anomaly determination device of a facility in which a plurality of events are issued in order and an information processing device, the system including:

an event interval acquisition unit that acquires an event interval with respect to a first event and a second event included in the plurality of events according to a request from the information processing device;

a process data acquisition unit that acquires at least one piece of process data of the facility;

an evaluation index calculation unit that calculates an evaluation index of a degree of similarity to normal data with respect to analysis target data including the event interval and the process data; and

an anomaly determination unit that determines presence or absence of anomaly of the facility by comparing the evaluation index with a threshold value set in advance.

In order to solve the above problem, according to at least one embodiment of the present disclosure, there is provided a control method for an anomaly determination system which includes an anomaly determination device of a facility in which a plurality of events are issued in order and an information processing device, in the control method, the anomaly determination device executes:

an event interval acquisition step of acquiring an event interval with respect to a first event and a second event included in the plurality of events according to a request from the information processing device;

a process data acquisition step of acquiring at least one piece of process data of the facility;

an evaluation index calculation step of calculating an evaluation index of a degree of similarity to normal data with respect to analysis target data including the event interval and the process data; and

an anomaly determination step of determining presence or absence of anomaly of the facility by comparing the evaluation index with a threshold value set in advance. Advantageous Effects of Invention

According to at least one embodiment of the present disclosure, it is possible to provide an anomaly determination device of a facility, an anomaly determination system, an anomaly determination method, a control method for an anomaly determination system, and an anomaly determination program, in which it is possible to suitably determine anomaly that may occur in the facility.

Brief Description of Drawings

Fig. 1 is a configuration diagram schematically showing an integrated coal gasifier power generation facility according to an embodiment.
Fig. 2 is a flowchart showing sequence control according to the embodiment.
Fig. 3 is a time chart showing temporal changes in the opening degrees of a transport pipe seal nitrogen shut-off valve and a hopper outlet shut-off valve corresponding to Fig. 2.
Fig. 4 is a time chart in a case where a failure occurs in a first limit switch in Fig. 3.
Fig. 5 is a configuration block diagram of an anomaly determination device according to the embodiment.
Fig. 6A is a flowchart showing an anomaly determination method according to the embodiment.
Fig. 6B is a flowchart showing the anomaly determination method according to the embodiment.
Fig. 7 is a time chart showing an example of a Mahalanobis distance calculated by an evaluation index calculation unit in Fig. 5, an event interval acquired by an event interval acquisition unit 102, and each process data acquired by a process data acquisition unit.
Fig. 8 is a calculation example of an SN ratio.
Fig. 9 is a configuration block diagram of an anomaly determination system according to the embodiment.

Description of Embodiments

Hereinafter, some embodiments of the present invention will be described with reference to the accompanying drawings. Meanwhile, configurations described in the embodiments or shown in the drawings are not intended to limit the scope of the invention, and are merely examples for description.

First, a facility that is a determination target of an anomaly determination device according to at least one embodiment will be described. The facility can widely include a facility in which sequence control for performing a plurality of events in order is performed. However, in the following, an integrated coal gasifier power generation facility 1 will be described as an embodiment.

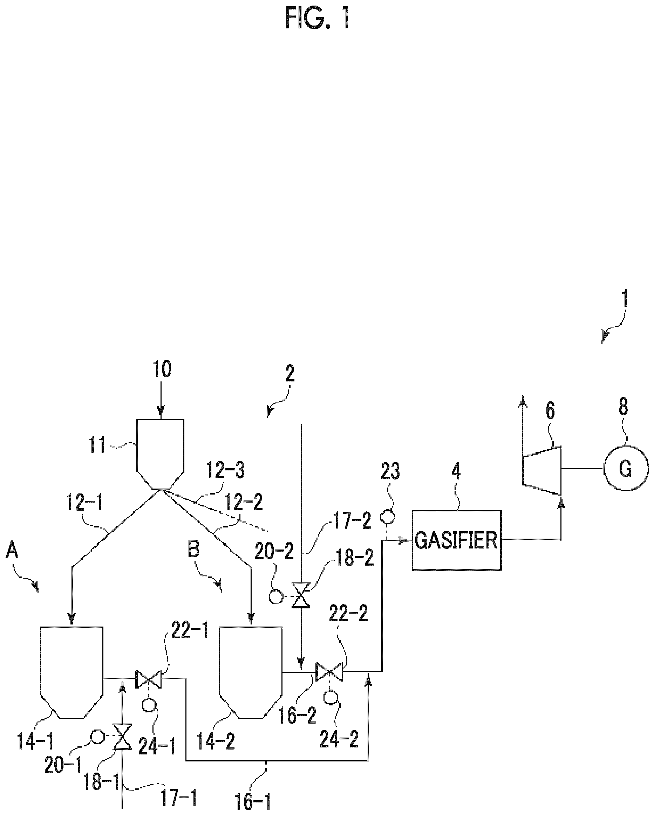

Fig. 1 is a configuration diagram schematically showing the integrated coal gasifier power generation facility 1 according to an embodiment. The integrated coal gasifier power generation facility 1 includes a powder fuel supply apparatus 2, a gasifier 4, a gas turbine 6, and a generator 8.

The powder fuel supply apparatus 2 is a device for supplying pulverized coal 10, which is powder fuel, to the gasifier 4. In the present embodiment, the powder fuel supply apparatus 2 is configured to be able to supply the pulverized coal 10, which is supplied from the outside, from a pulverized coal bin 11 capable of temporarily storing the pulverized coal 10 to the gasifier 4 via a plurality of supply systems (a supply system A, a supply system B, ...).

A plurality of discharge pipes 12-1, 12-2, ..., which correspond to the respective supply systems A, B, ..., are connected to the pulverized coal bin 11. The discharge pipes 12-1, 12-2, ... can be independently opened and closed, and each of the discharge pipes 12-1, 12-2, ... is connected to the upstream side of each of a plurality of hoppers 14-1, 14-2, ... corresponding to the respective supply systems A, B, .... Each of a plurality of transport pipes 16-1, 16-2, ... is connected to the downstream side of each of the plurality of hoppers 14-1, 14-2, .... The plurality of transport pipes 16-1, 16-2, ... are connected to the gasifier 4 by joining each other on the downstream side.

Each of nitrogen supply pipes 17-1, 17-2, ... for supplying nitrogen from the outside in order to remove the pulverized coal 10 remaining in each of the transport pipes 16-1, 16-2, ... is connected to each of the plurality of transport pipes 16-1, 16-2, .... Each of transport pipe seal nitrogen shut-off valves 18-1, 18-2, ... for switching between supply and stop of a nitrogen gas is provided in each of the plurality of nitrogen supply pipes 17-1, 17-2, .... The transport pipe seal nitrogen shut-off valves 18-1, 18-2, ... are control valves in which the open/closed states thereof can be controlled by sequence control (described later), and are provided with first limit switches 20-1, 20-2, ... for detecting the open/closed states. Each of the first limit switches 20-1, 20-2, ... is a mechanical switch that is installed in each of the transport pipe seal nitrogen shut-off valves 18-1, 18-2, ... in a set of limit switch for detecting a fully open state of each of the transport pipe seal nitrogen shut-off valves 18-1, 18-2, ... (hereinafter, referred to as a first limit switch fully open) and limit switch for detecting a fully closed state of each of the transport pipe seal nitrogen shut-off valves 18-1, 18-2, ... (hereinafter, referred to as a first limit switch fully closed), and that can output a signal corresponding to the fully open state/fully closed state by ON/OFF switching.

In addition, each of hopper outlet shut-off valves 22-1, 22-2, ... for switching between the open/closed states of each of the transport pipes 16-1, 16-2, ... is provided in each of the plurality of transport pipes 16-1, 16-2, .... The hopper outlet shut-off valves 22-1, 22-2, ... are control valves in which the open/closed states thereof can be controlled by sequence control (described later), and are provided with second limit switches 24-1, 24-2, ... for detecting the open/closed states. Each of the second limit switches 24-1, 24-2, ... is a mechanical switch that is installed in each of the hopper outlet shut-off valves 22-1, 22-2, ... in a set of limit switch for detecting a fully open state of each of the hopper outlet shut-off valves 22-1, 22-2, ... (hereinafter, referred to as a second limit switch fully open) and a limit switch for detecting a fully closed state of each of the hopper outlet shut-off valves 22-1, 22-2, ... (hereinafter, referred to as second limit switch fully closed), and that can output a signal corresponding to the fully open state/fully closed state by ON/OFF switching.

In the powder fuel supply apparatus 2 having the above configuration, the replenishment of the pulverized coal 10 to the plurality of hoppers 14-1, 14-2, ... or the supply of the pulverized coal 10 from the plurality of hoppers 14-1, 14-2, ... to the gasifier 4 can be performed in the plurality of supply systems A, B, .... For example, in a case of replenishing the pulverized coal 10 to the hopper 14-1 corresponding to the supply system A, the discharge pipe 12-1 corresponding to the supply system A is opened, so that both the pulverized coal bin 11 and the hopper 14-1 are pressure-equalized in a normal pressure state, and the pulverized coal 10 is discharged to the hopper 14-1 via the discharge pipe 12-1. At this time, the discharge pipes 12-2, 12-3, ... corresponding to the other supply systems B, C, ... are closed. In addition, in a case of supplying the pulverized coal 10 from the hopper 14-2 corresponding to the supply system B to the gasifier 4, the transport pipe 16-2 corresponding to the hopper 14-2 enters an open state, and the other transport pipes 16-1, 16-3, ... corresponding to the other supply systems A, C, ... enter a closed state.

The gasifier 4 gasifies the pulverized coal 10 supplied from the powder fuel supply apparatus 2 having such a configuration by partially burning the pulverized coal 10 to produce a raw syngas. A fuel gas is produced by removing impurities from the raw syngas produced in the gasifier 4 by a gas clean-up unit (not shown). The generator 8 is connected to the gas turbine 6, and the gas turbine 6 is driven by the fuel gas, so that the generator 8 generates power.

Subsequently, the sequence control that is performed in the integrated coal gasifier power generation facility 1 having the above configuration will be described. Here, as an example of the sequence control, sequence control for controlling the transport pipe seal nitrogen shut-off valve 18-1 and the hopper outlet shut-off valve 22-1 configuring the supply system A in the powder fuel supply apparatus 2 provided in the integrated coal gasifier power generation facility 1 will be described.

In the following description, the sequence control for the supply system A among the plurality of supply systems A, B, ... provided in the powder fuel supply apparatus 2 will be described. However, the same applies to the sequence control for the other supply systems B, ... unless otherwise specified.

In the present embodiment, the sequence control for switching the hopper outlet shut-off valve 22-1 from the fully open state to the fully closed state after removing the pulverized coal 10 remaining in the transport pipe 16-1 by the nitrogen from the nitrogen supply pipe 17-1 by switching the transport pipe seal nitrogen shut-off valve 18-1 from the fully closed state to the fully open state when the supply of the pulverized coal 10 from the hopper 14-1 to the gasifier 4 via the transport pipe 16-1 is stopped in the supply system A will be described.

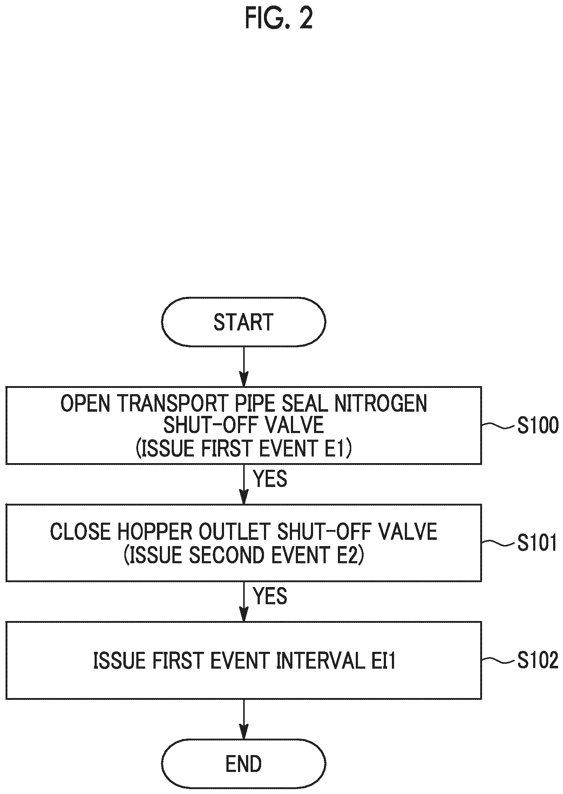

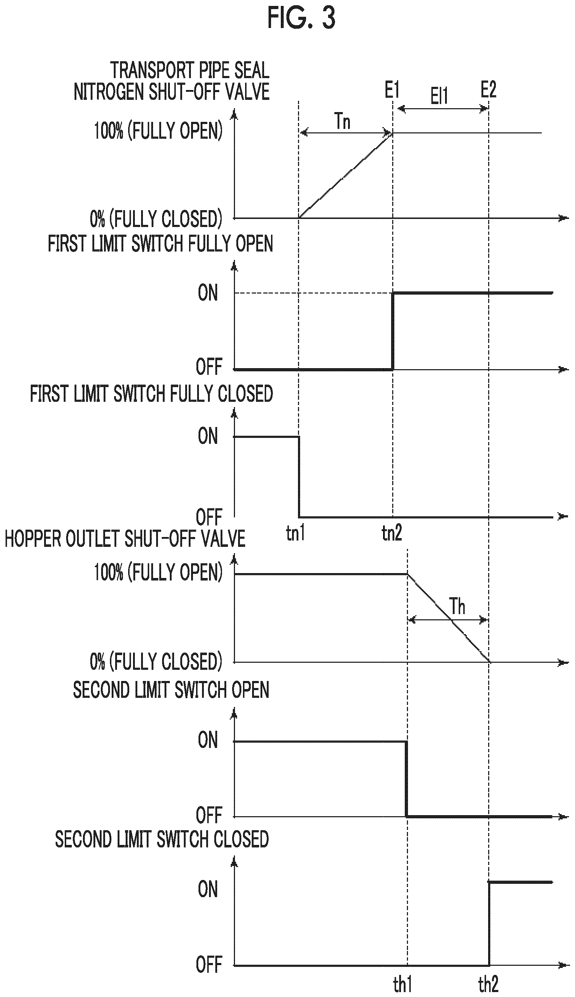

Fig. 2 is a flowchart showing the sequence control according to the embodiment, and Fig. 3 is a time chart showing the temporal changes in the opening degrees of the transport pipe seal nitrogen shut-off valve 18-1 and the hopper outlet shut-off valve 22-1 corresponding to Fig. 2. In this sequence control, in the initial state, the transport pipe seal nitrogen shut-off valve 18-1 is in the fully closed state, and the hopper outlet shut-off valve 22-1 is in the fully open state.

When the sequence control is started, first, a command (event) for the opening operation to fully open the transport pipe seal nitrogen shut-off valve 18-1 which is in the fully closed state is issued to the transport pipe seal nitrogen shut-off valve 18-1 (step S100). When the transport pipe seal nitrogen shut-off valve 18-1 receives the command for the opening operation issued in step S100 at time tn1, as shown in Fig. 3, the opening degree starts to increase from the fully closed state (opening degree 0%), and after a predetermined operation period Tn, the opening degree reaches the fully open state (opening degree 100%) at time tn2. The operation period Tn is a period required for the transport pipe seal nitrogen shut-off valve 18-1 to transition from the fully closed state to the fully open state, and depends on the specification of the transport pipe seal nitrogen shut-off valve 18-1. In this manner, a first event E1 is detected as being issued by switching the first limit switch fully closed 20-1 from the ON state to the OFF state and further switching the first limit switch fully open 20-1 from the OFF state to the ON state until the transport pipe seal nitrogen shut-off valve 18-1 reaches the fully open state by the command for the opening operation issued in step S100.

Subsequently, a command (event) to fully close the hopper outlet shut-off valve 22-1 which is in the fully open state is issued to the hopper outlet shut-off valve 22-1 (step S101). When the hopper outlet shut-off valve 22-1 receives the command for the closing operation issued in step S101, as shown in Fig. 3, the opening degree starts to decrease from the fully open state (opening degree 100%) at time th1, and reaches the fully closed state (opening degree 0%) at time th2 after a predetermined operation period Th. The operation period Th is a period required for the hopper outlet shut-off valve 22-1 to transition from the fully open state to the fully closed state, and is a parameter depending on the specification of the hopper outlet shut-off valve 22-1. In this manner, a second event E2 is detected as being issued by switching the second limit switch fully open 24-1 from the ON state to the OFF state and further switching the second limit switch fully closed 24-1 from the OFF state to the ON state until the hopper outlet shut-off valve 22-1 reaches the fully closed state by the command for the closing operation issued in step S101.

Subsequently, a first event interval EI1 is issued based on the first event E1 detected by the first limit switch fully open 20-1 and the first limit switch fully closed 20-1 in step S100, and the second event E2 detected by the second limit switch fully open 24-1 and the second limit switch fully closed 24-1 in step S101 (step S102). The first event interval EI1 is an interval between two events generated in different devices, and in the present embodiment, the first event interval EI1 is an interval between the first event E1 related to the transport pipe seal nitrogen shut-off valve 18-1 detected by the first limit switch fully open 20-1 and the first limit switch fully closed 20-1 and the second event E2 related to the hopper outlet shut-off valve 22-1 detected by the second limit switch fully open 24-1 and the second limit switch fully closed 24-1 in step S101, and is specifically obtained by the following expression.

$$EI1 = E2 - E1 \ (th2 - tn2)$$

In this manner, the states of the transport pipe seal nitrogen shut-off valve 18-1 and the hopper outlet shut-off valve 22-1, which are control targets of the sequence control, are transmitted to a controller as the first event E1 and the second event E2 detected by the first limit switch fully open 20-1, the first limit switch fully closed 20-1, the second limit switch fully open 24-1, and the second limit switch fully closed 24-1, respectively, and the first event interval EI1 obtained based on the first event E1 and the second event E2. The controller controls each configuration of the integrated coal gasifier power generation facility 1 in accordance with the received results. Here, in a case where the first limit switch fully open 20-1, the first limit switch fully closed 20-1, the second limit switch fully open 24-1, and the second limit switch fully closed 24-1 are normally operated, the controller appropriately recognizes the operations of the transport pipe seal nitrogen shut-off valve 18 and the hopper outlet shut-off valve 22-1 shown in Fig. 3, and stably controls the integrated coal gasifier power generation facility 1. However, in the first limit switch fully open 20-1, the first limit switch fully closed 20-1, the second limit switch fully open 24-1, and the second limit switch fully closed 24-1, a problem may occur in which the switching operation is not normally performed in association with the opening and closing of the transport pipe seal nitrogen shut-off valve 18-1 and the hopper outlet shut-off valve 22-1 due to a factor such as a failure.

For example, in a case where a failure occurs in the first limit switch fully open 20-1, even though the transport pipe seal nitrogen shut-off valve 18 is switched from the fully closed state to the fully open state by the first event E1, the output of the first limit switch fully open 20-1 is not normally switched from the OFF signal to the ON signal (the OFF signal is maintained), and a signal corresponding to the fully open state of the transport pipe seal nitrogen shut-off valve 18 is not normally output.

In this case, in the sequence control in which the command for the opening operation is given to the transport pipe seal nitrogen shut-off valve 18 to enter the fully open state and then the command for the closing operation is given to the hopper outlet shut-off valve 22-1 to enter the fully closed state, the controller that receives the first event E1, the second event E2, and the first event interval EI1 based on the outputs of the first limit switch fully open 20-1, the first limit switch fully closed 20-1, the second limit switch fully open 24-1, and the second limit switch fully closed 24-1 and performs control is originally supposed to switch the first limit switch fully closed 20-1 from the ON state to the OFF state and then switch the first limit switch fully open 20-1 from the OFF state to the ON state, and thereafter, switch the second limit switch fully open 24-1 from the ON state to the OFF state and then switch the second limit switch fully closed 24-1 from the OFF state to the ON state, as shown in Fig. 3.

However, in a case where a failure occurs in the first limit switch fully open 20-1, the command for the opening operation to the transport pipe seal nitrogen shut-off valve 18 and the command for the closing operation to the hopper outlet shut-off valve 22-1 are sequentially commanded by the sequence control. However, there is a concern that an event in which the first event E1 is executed after the second event E2 may occur due to an event in which the first limit switch fully open 20-1 remains in the OFF state and the second limit switch fully closed 24-1 enters the ON state (that is, the value of the first event interval EI1, which should be originally positive, is recognized as a negative value).

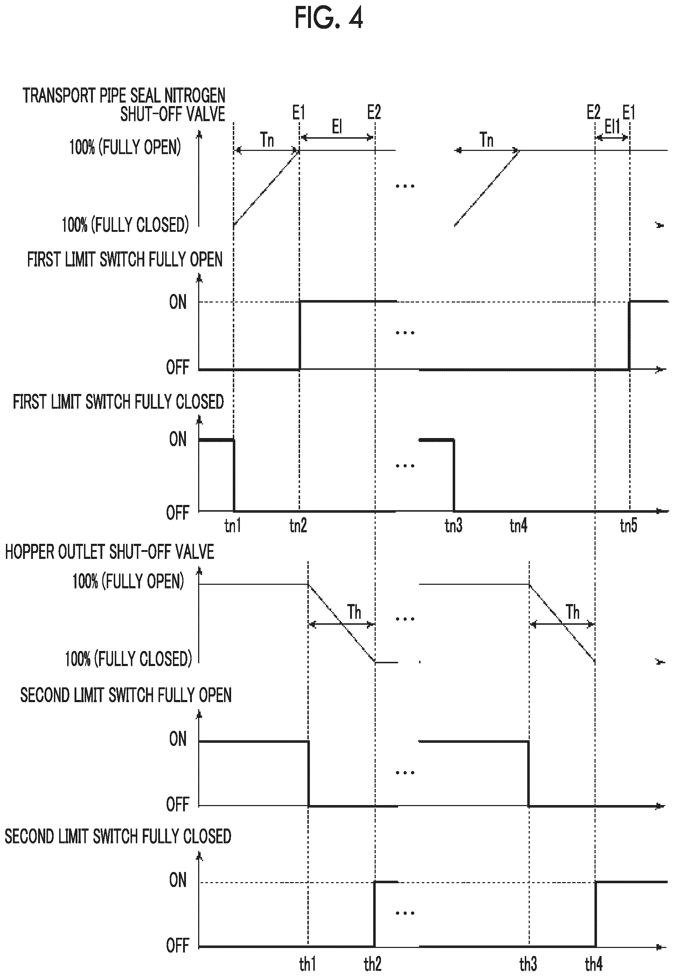

Fig. 4 shows this event example. However, since a failure has occurred in the first limit switch fully open 20-1, the first limit switch fully closed 20-1 is switched from the ON state to the OFF state at time tn3 (corresponding to time tn1), the first limit switch fully open 20-1 remains in the OFF state even in a case in which the transport pipe seal nitrogen shut-off valve 18 is fully opened at time tn4 (corresponding to time tn2), and the first limit switch fully open 20-1 is finally switched to the ON state at time tn5 (time after time tn4).

In a case where a failure does not occur in the first limit switch fully open 20-1, the first limit switch fully open 20-1 is switched from the OFF state to the ON state at time tn4 in the original flow. That is, as described above, since the first limit switch fully open 20-1 is in the ON state at time tn5, the first event E1 is detected at this timing. On the other hand, since the hopper outlet shut-off valve 22-1 is in the normal state, the second limit switch fully open 24-1 is switched from the ON state to the OFF state at time th3 (corresponding to time th1), and the second limit switch fully closed 24-1 is switched from the OFF state to the ON state at time th4 (corresponding to time th2). Therefore, the second event E2 is detected.

As described above, due to a relationship of EI1 = E2 - E1, since time tn5 is subtracted from time th4, the first event interval EI1 takes a negative value. As a reason for such an event to occur, for example, the ON/OFF of the first limit switch fully open 20-1 and the second limit switch fully closed 24-1 are events that are issued as a sequence, but are not events that should be issued as sequence control, and thus such an event may occur. In a case where such an event occurs, there is a concern that the controller may cause anomaly in the output or the like of the generator 8 due to the operation for maintaining the stable operation of the integrated coal gasifier power generation facility 1. Such anomaly can be suitably determined by the anomaly determination device 100 described below.

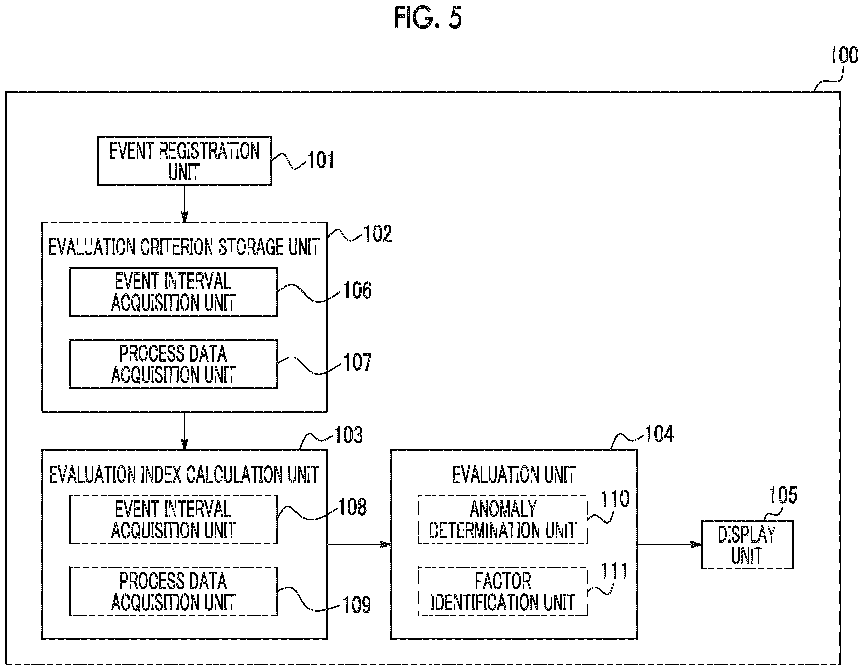

Fig. 5 is a configuration block diagram of the anomaly determination device 100 according to the embodiment. The anomaly determination device 100 is configured to include, for example, a central processing unit (CPU), a random access memory (RAM), a read only memory (ROM), and a computer-readable storage medium. Then, a series of processing for realizing various functions is stored in a storage medium or the like in the form of a program, as an example, and the CPU reads out this program to a RAM or the like, and executes processing for information processing and calculation, whereby various functions are realized. A form installed in advance in the ROM or other storage medium, a form provided in a state of being stored in a computer-readable storage medium, or a form of being delivered via wired or wireless communication means may be applied as the program. The computer-readable storage media is a magnetic disk, a magneto-optical disk, a CD-ROMs, a DVD-ROMs, a semiconductor memory, or the like.

As shown in Fig. 5, the anomaly determination device 100 includes an event registration unit 101, an evaluation criterion storage unit 102, an evaluation index calculation unit 103, an evaluation unit 104, and a display unit 105.

The event registration unit 101 is configured to register information about an event to be monitored including a plurality of events included in the sequence control. In general, the sequence control includes a plurality of events that are issued in order, and the events included in the sequence control can also be registered in advance by the event registration unit 101 (of course, the events that are not the control targets of the sequence control can also be registered). The registration of the events included in such sequence control may be performed, for example, by the operator confirming a plurality of events included in the sequence control and inputting the plurality of events through an interface such as a keyboard or a mouse, or may be performed by analyzing the sequence control to automatically identify the plurality of events included in the sequence control.

The evaluation criterion storage unit 102 is configured to calculate and store an evaluation criterion (threshold value MDref) to be compared with the evaluation index calculated by the evaluation index calculation unit 103 for the anomaly determination in the evaluation unit 104, and includes an event interval acquisition unit 106 and a process data acquisition unit 107.

The event interval acquisition unit 106 is configured to acquire the first event interval EI1 described above, based on the outputs of the first limit switch fully open 20-1, the first limit switch fully closed 20-1, the second limit switch fully open 24-1, and the second limit switch fully closed 24-1 in the period in which the integrated coal gasifier power generation facility 1 performs the normal operation.

The process data acquisition unit 107 is configured to acquire at least one piece of process data Pd of the integrated coal gasifier power generation facility 1, which is a determination target, in the period in which the integrated coal gasifier power generation facility 1 is normally operated. The process data Pd may be a physical quantity that can be detected by various sensors installed in the integrated coal gasifier power generation facility 1 or may be a control signal that is handled by the controller. In the present embodiment, the process data acquisition unit 107 acquires, as the process data Pd, an output Pd1 of the generator 8 and an air ratio Pd2 detected by an air ratio sensor 23 installed at the inlet of the gasifier 4.

The evaluation criterion storage unit 102 obtains an evaluation criterion, based on the event interval (first event interval EI1) acquired by the event interval acquisition unit 106 and the process data Pd acquired by the process data acquisition unit 107, and readably stores the evaluation criterion.

The evaluation index calculation unit 103 is configured to calculate an evaluation index for anomaly determination, and includes an event interval acquisition unit 108 and a process data acquisition unit 109.

The event interval acquisition unit 108 is configured to acquire the first event interval EI1, based on the outputs of the first limit switch fully open 20-1, the first limit switch fully closed 20-1, the second limit switch fully open 24-1, and the second limit switch fully closed 24-1, as with the event interval acquisition unit 106 provided in the evaluation criterion storage unit 102. The process data acquisition unit 109 is configured to acquire the process data Pd, as with the process data acquisition unit 107 included in the evaluation criterion storage unit 102 described above.

The evaluation index is calculated as an index indicating the degree of similarity to the normal data, based on the first event interval EI1 acquired by the event interval acquisition unit 108 and the process data Pd acquired by the process data acquisition unit 109, in the anomaly determination period in which it is unknown whether or not the integrated coal gasifier power generation facility 1 is performing the normal operation. In the present embodiment, as an example of such an evaluation index, a Mahalanobis distance MD by a Mahalanobis-Taguchi method (MT method) is calculated.

The evaluation unit 104 is configured to evaluate the evaluation index calculated by the evaluation index calculation unit 103 by comparing the evaluation index with the evaluation criterion stored in the evaluation criterion storage unit 102, and includes an anomaly determination unit 110 and a factor identification unit 111.

The anomaly determination unit 110 is configured to determine presence or absence of anomaly by comparing the evaluation index with a threshold value which is the evaluation criterion. In the present embodiment, the magnitude relationship between the Mahalanobis distance MD calculated by the evaluation index calculation unit 103 and the threshold value MDref, which is the evaluation criterion read out from the evaluation criterion storage unit 102, is compared, and in a case where the Mahalanobis distance MD exceeds the threshold value MDref, the anomaly determination is made.

The factor identification unit 111 is configured to identify the factor of anomaly, based on the degree of contribution to the evaluation index in a case where the anomaly determination unit 110 determines that there is anomaly. In a case where the Mahalanobis distance MD is calculated as the evaluation index as described above, the factor identification based on an SN ratio indicating the degree of contribution to the Mahalanobis distance MD is performed by calculating the SN ratio.

The display unit 105 is configured to display the first event interval EI1, the process data Pd, and the Mahalanobis distance MD which is the evaluation index. The display unit 105 displays these elements in an aspect recognizable by the operator, for example, on a display or the like, so that the operator can easily grasp various pieces of information about the anomaly determination.

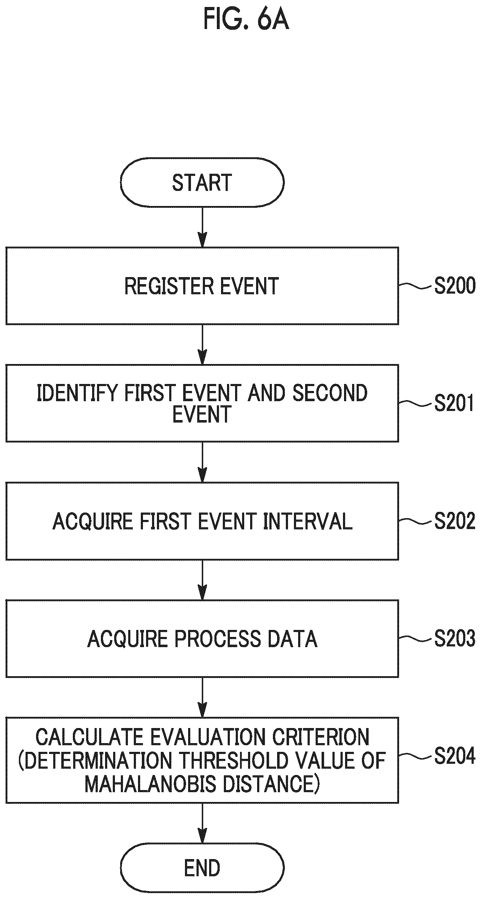

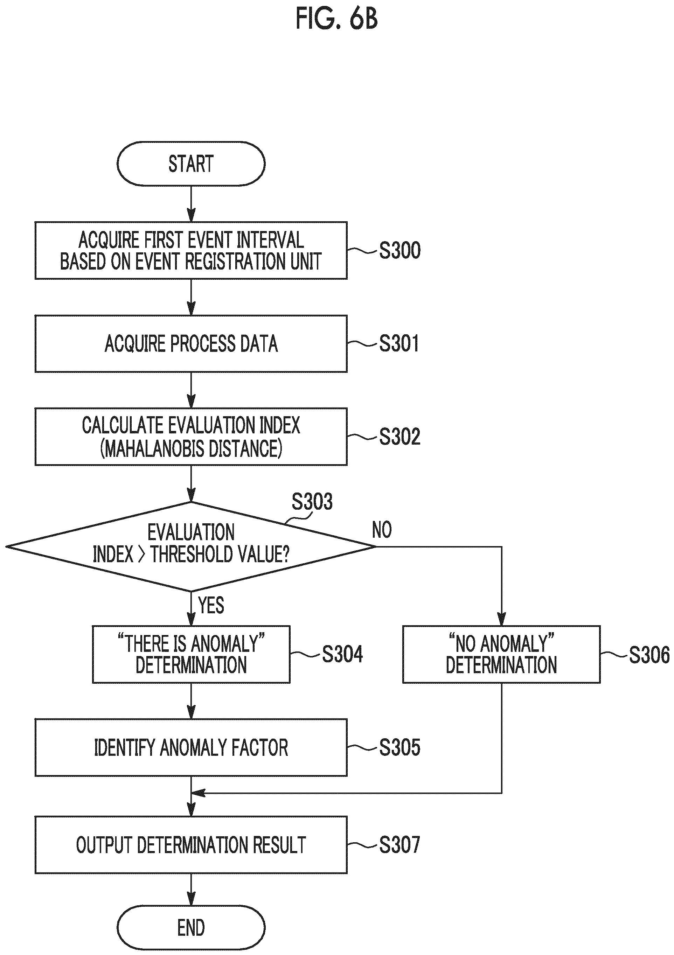

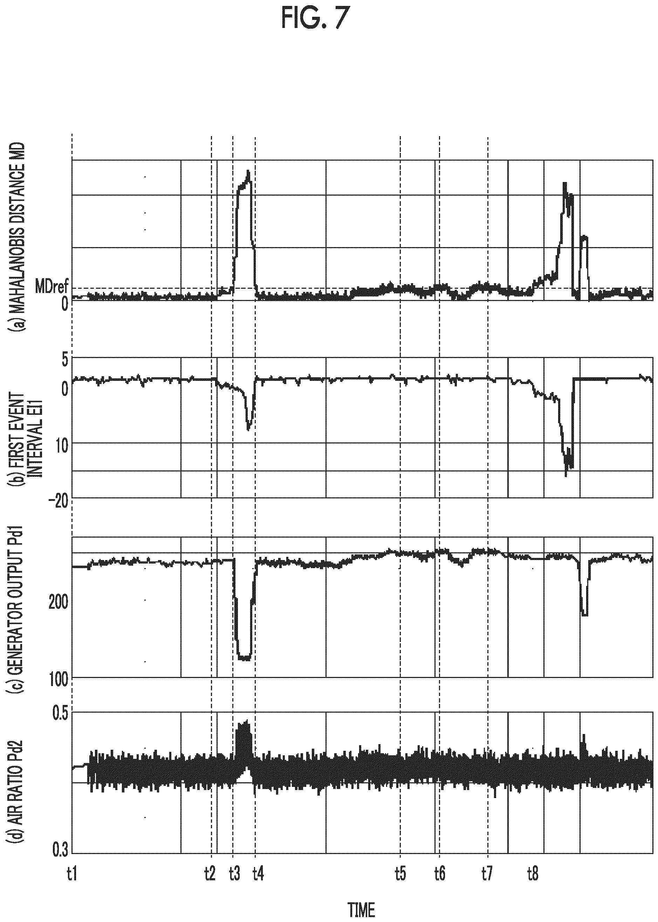

Subsequently, an anomaly determination method that is performed by the anomaly determination device 100 having the above configuration will be described. Figs. 6A and 6B are flowcharts showing the anomaly determination method according to the embodiment, and Fig. 7 is a time chart showing an example of the Mahalanobis distance MD calculated by the evaluation index calculation unit 103 in Fig. 5, the first event interval EI1 acquired by the event interval acquisition unit 106 or 108, and each process data Pd acquired by the process data acquisition unit 107 or 109.

First, a method of obtaining the evaluation criterion (MDref) that is stored in the evaluation criterion storage unit 102 will be described with reference to Fig. 6A. The evaluation criterion calculation by the evaluation criterion storage unit 102 is performed by using the normal data acquired in the period in which the integrated coal gasifier power generation facility 1 performs the normal operation. The normal data acquisition period is a period in which it is clear that the operation of the integrated coal gasifier power generation facility 1 is normal. In Fig. 7, the normal data acquisition period is from time t1 to time t2.

First, information about the event to be monitored that includes a plurality of events included in the sequence control is registered by the event registration unit 101 (step S200). Specifically, the plurality of events included in the sequence control are identified, and each of the identified plurality of events is registered. Such registration may be manually performed by the operator or may be performed by automatically recognizing the plurality of events included in the sequence control.

Subsequently, the event interval acquisition unit 106 included in the evaluation criterion storage unit 102 identifies the first event E1 and the second event E2, based on the switching states of the first limit switch fully open 20-1, the first limit switch fully closed 20-1, the second limit switch fully open 24-1, and the second limit switch fully closed 24-1 in the normal data acquisition period (step S201), and acquires the first event interval EI1, based on the first event E1 and the second event E2 (step S202). In the present embodiment, the first event E1 is identified by the switching of the first limit switch fully closed 20-1 from ON to OFF and the switching of the first limit switch fully open 20-1 from OFF to ON, which correspond to the transport pipe seal nitrogen shut-off valve 18, and the second event E2 is identified by the switching of the second limit switch fully open 24-1 from ON to OFF and the switching of the second limit switch fully closed 24-1 from ON to OFF, which correspond to the hopper outlet shut-off valve 22, and the interval between the first event E1 and the second event E2 is acquired as the first event interval EI1.

In Fig. 7, a temporal change of the first event interval EI1 that is sequentially acquired in step S202 is shown. In the normal data acquisition period (between time t1 and time t2), all of the first limit switch fully open 20-1, the first limit switch fully closed 20-1, the second limit switch fully open 24-1, and the second limit switch fully closed 24-1 are normally operated, and therefore, the first event interval EI1 indicates a positive substantially fixed value.

Subsequently, the process data acquisition unit 107 included in the evaluation criterion storage unit 102 acquires at least one piece of process data Pd of the integrated coal gasifier power generation facility 1, which is a determination target, as the normal data in the normal data acquisition period (step S203). In the present embodiment, as the process data Pd, the output Pd1 of the generator 8 and the air ratio Pd2 detected by the air ratio sensor 23 installed at the inlet of the gasifier 4 are acquired, and each of the output Pd1 and the air ratio Pd2 shows a temporal change as shown in Fig. 7.

Subsequently, the evaluation criterion storage unit 102 calculates the threshold value MDref of the Mahalanobis distance MD, which serves as the evaluation criterion for the anomaly determination, based on the first event interval EI1 acquired in step S202 and the process data Pd acquired in step S203, in the normal data acquisition period (step S204). The threshold value MDref calculated in this manner is readably stored in the evaluation criterion storage unit 102 as an evaluation criterion.

Subsequently, the anomaly determination using the evaluation criterion obtained in Fig. 6A will be described with reference to Fig. 6B. This anomaly determination is performed in the period in which it is not known whether or not the operation of the integrated coal gasifier power generation facility 1 is normal.

First, the event interval acquisition unit 108 included in the evaluation index calculation unit 103 acquires the first event interval EI1, based on the event registered by the event registration unit 101 in step S200 (step S300). In Fig. 7, the temporal change of the first event interval EI1 sequentially acquired in step S300 is shown. In the normal data acquisition period (between time t1 and time t2), as described above, the first event interval EI1 indicates a positive substantially fixed value. However, in the period in which the anomaly determination is performed (after time t2), the first event interval EI1 is temporarily disturbed and indicates a negative value at a timing at which a failure occurs in the first limit switch fully open 20-1.

Subsequently, the process data acquisition unit 109 included in the evaluation index calculation unit 103 acquires at least one piece of process data Pd of the integrated coal gasifier power generation facility 1, which is the determination target (step S301). In the present embodiment, as the process data Pd, the output Pd1 of the generator 8 and the air ratio Pd2 detected by the air ratio sensor 23 installed at the inlet of the gasifier 4 are acquired, and each of the output Pd1 and the air ratio Pd2 shows a temporal change as shown in Fig. 7.

Subsequently, the evaluation index calculation unit 103 obtains a sample average and a sample covariance with respect to the first event interval EI1 acquired in step S300 and the process data Pd acquired in step S301, and calculates the Mahalanobis distance MD with respect to the analysis data by using each sample (step S302).

Subsequently, the anomaly determination unit 110 determines presence or absence of anomaly by comparing the Mahalanobis distance MD, which is the evaluation index calculated in step S302, with the threshold value MDref, which is the evaluation criterion stored in the evaluation criterion storage unit 102 (step S303). As described above with reference to Fig. 6A, the threshold value MDref is calculated in advance using the normal data by the evaluation criterion storage unit 102. As a result, in a case where the Mahalanobis distance MD exceeds the threshold value MDref (step S303: YES), "there is anomaly" determination is made (step S304).

In Fig. 7, the process data Pd and the Mahalanobis distance MD fluctuate after time t8, and thus remarkable anomaly occurs in the integrated coal gasifier power generation facility 1. However, the Mahalanobis distance MD exceeds the threshold value MDref at times t5, t6, and t7, which are previous stages, and thus it is shown that anomaly determination is made at a prodromal stage. This means that, by using the Mahalanobis distance MD calculated based on the first event interval EI1 and the process data Pd as the evaluation index, it is possible to early determine anomaly that is difficult to determine in the process data Pd.

In addition, in Fig. 7, the Mahalanobis distance MD shows a behavior of greatly exceeding the threshold value MDref in the period from time t3 to time t4. However, since a behavior of temporarily decreasing the output of the generator 8 in the process data Pd is shown in the period, the behavior is determined to be out of a determination target. In this manner, in a case where the process data Pd exhibits a behavior exceeding the allowable range and is not suitable for determination, the anomaly determination may not be performed.

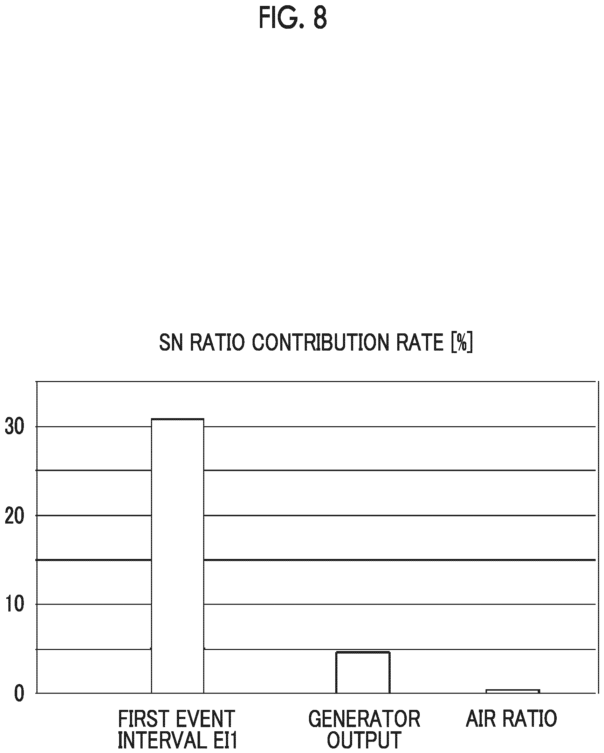

Subsequently, the factor identification unit 111 identifies the factor of the anomaly by calculating the SN ratio indicating the degree of contribution to the Mahalanobis distance MD (step S305). Fig. 8 is a calculation example of the SN ratio. In Fig. 8, the contribution rate to the Mahalanobis distance MD is shown for each of the first event interval EI1 and the process data Pd included in the analysis data. By referring to the SN ratio calculated in this manner, in a case where the anomaly determination is made, the anomaly factor can be identified based on the degree of contribution to the Mahalanobis distance MD with respect to each of the first event interval EI1 and the process data Pd included in the analysis data.

In a case where the Mahalanobis distance MD is equal to or smaller than the threshold value MDref (step S303: NO), the "no anomaly determination" is made (step S306).

Subsequently, the display unit 105 displays the anomaly determination result (step S307). In step S307, in addition to the anomaly determination result, as various pieces of information serving as a basis for the anomaly determination, as shown in Fig. 7, the Mahalanobis distance MD, the first event interval EI1 included in the analysis data, and the process data Pd are displayed, so that the operator can easily grasp the situation of the integrated coal gasifier power generation facility 1.

In addition, in the embodiment described above, in step S302, the evaluation index is calculated by using the first event interval EI1 based on one set of the first event E1 and the second event E2 selected from the plurality of events registered in step S200. In contrast, in another embodiment, in step S302, the evaluation index may be calculated by using the plurality of first event intervals EI1 based on the plurality of sets of the first event E1 and the second event E2 selected from the plurality of events registered in step S200.

In this case, the evaluation index calculation unit 103 may calculate the Mahalanobis distance MD as the evaluation index, based on the plurality of first event intervals EI1, and the factor identification unit 111 may calculate the SN ratio indicating the degree of contribution to such a Mahalanobis distance MD. In this way, in the factor identification unit 111, by identifying which event interval EI has a large degree of contribution to the Mahalanobis distance MD at the time of anomaly determination, it is possible to identify the event, which is a factor of the anomaly, in regard to a large number of events that are issued as a sequence.

In the embodiment described above, the anomaly determination is performed with respect to the sequence control related to the single supply system A among the plurality of supply systems A, B, ... included in the integrated coal gasifier power generation facility 1. However, the anomaly determination may be performed with respect to the sequence control related to two or more supply systems. In this case, the plurality of events included in the plurality of sequence controls related to each supply system may be grouped and registered for each supply system, and the first event interval EI1 acquired with respect to the first event E1 and the second event E2 included in each registered group may be treated as analysis data together with the process data Pd.

In addition, in the embodiment described above, the event issued from the device different from the transport pipe seal nitrogen shut-off valve 18-1 and the hopper outlet shut-off valve 22-1 has been described. However, a plurality of events issued from the same device may be targeted.

As described above, according to each embodiment described above, at least one piece of process data is acquired with respect to the facility that is the anomaly determination target, and the event interval is acquired with respect to the first event and the second event among the plurality of events that are performed in order in the sequence control performed on the facility. At least one piece of process data and the event interval are handled as the analysis target data and are used to calculate the evaluation index of the degree of similarity to the normal data. In this way, by comparing the evaluation index calculated based on the event interval together with the process data with the threshold value, it is possible to perform the anomaly determination that takes into account the influence between events issued as a sequence.

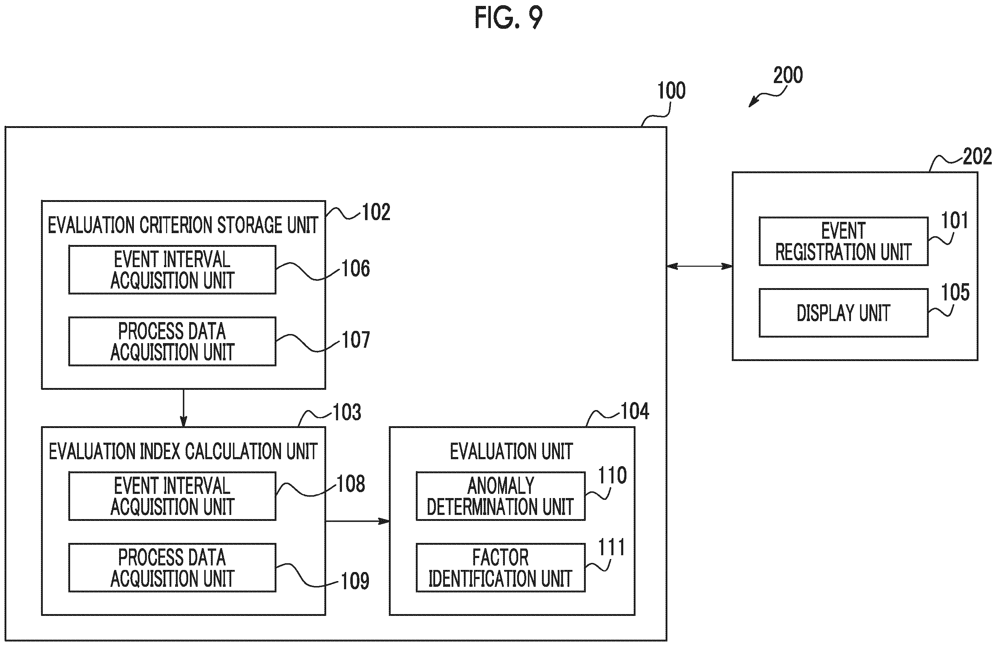

Each processing that is executed by the anomaly determination device 100 in the embodiment described above can be configured as an anomaly determination system 200 that is executed by an information processing device 202 capable of communicating with the anomaly determination device 100 (refer to Fig. 9). In this case, the information processing device 202 includes at least one of the event registration unit 101 or the display unit 105, and the anomaly determination device 100 includes the evaluation criterion unit 102, the evaluation calculation unit 104, and the evaluation unit 104. The processing in the criterion index calculation unit 103 is executed according to a request made to the anomaly determination device 100 to perform the anomaly determination shown in Fig. 6B through the display unit 105 of the information processing device 202.

In addition, it is possible to appropriately replace the components in the embodiment described above with well-known components within the scope which does not depart from the concept of the present disclosure, and the embodiments described above may be appropriately combined with each other.

The contents described in each of the embodiments described above are understood as follows, for example.

(1) A facility anomaly determination device according to an aspect is an anomaly determination device (100) of a facility in which a plurality of events are issued in order, the anomaly determination device including:

an event interval acquisition unit (108) that acquires an event interval (EI1) with respect to a first event (E1) and a second event (E2) included in the plurality of events;
a process data acquisition unit (109) that acquires at least one piece of process data (Pd) of the facility;
an evaluation index calculation unit (103) that calculates an evaluation index (MD) of a degree of similarity to normal data with respect to analysis target data including the event interval and the process data; and
an anomaly determination unit (110) that determines presence or absence of anomaly of the facility by comparing the evaluation index with a threshold value (MDref) set in advance.

According to the aspect of the above (1), at least one piece of process data is acquired with respect to the facility that is an anomaly determination target, and an event interval is acquired with respect to the first event and the second event among the plurality of events that are issued in order with respect to the facility. At least one piece of process data and the event interval are handled as the analysis target data and are used to calculate the evaluation index of the degree of similarity to the normal data. In this way, by comparing the evaluation index calculated based on the event interval together with the process data with the threshold value, it is possible to perform the anomaly determination that takes into account the influence between events issued as a sequence.

(2) In another aspect, in the aspect of the above (1),

the anomaly determination device of a facility further includes an event registration unit (101) that registers the plurality of events,
in which the event interval acquisition unit acquires the event interval with respect to the first event and the second event included in the plurality of events registered in the event registration unit.

According to the aspect of the above (2), the plurality of events are registered, and the event interval that is identified with respect to the first event and the second event that are optionally selected from the plurality of registered events is used to calculate the evaluation index together with the process data. In this way, by calculating the evaluation index, based on the event interval acquired from each of the registered events, it is possible to suitably perform the anomaly determination in the facility.

Even in a case where some events are not registered in the event registration unit, by obtaining an evaluation index from the event intervals and process data related to the registered events, it is possible to perform the anomaly determination taking into account the potential influence of the events that have not been registered.

(3) In another aspect, in the aspect of the above (1) or (2),
the normal data includes the event interval and the process data acquired in a period in which the facility is operated normally.

According to the aspect of the above (3), the normal data that is used to calculate the evaluation index can be acquired with good reliability.

(4) In another aspect, in the aspect of any one of the above (1) to (3),
the analysis target data does not include a period in which the process data deviates from an allowable range set in advance.

According to the aspect of the above (4), by excluding a period deviating from the allowable range from the analysis target data that is used to calculate the evaluation index, it is possible to improve the anomaly determination accuracy.

(5) In another aspect, in the aspect of any one of the above (1) to (4),
the event interval acquisition unit acquires a plurality of the event intervals corresponding to different combinations of the first event and the second event, and the analysis target data includes the plurality of event intervals.

According to the aspect of the above (5), the plurality of event intervals are included in the analysis target data by selecting a plurality of sets of the first event and the second event from the plurality of events. In this way, by taking into consideration the influence between a plurality of sets of events that are associated with each other in the sequence control, it is possible to perform the anomaly determination with higher accuracy.

(6) In another aspect, in the aspect of the above (5),
the anomaly determination device of a facility further includes a factor identification unit (111) that identifies a factor of the anomaly, based on a degree of contribution to the evaluation index in a case where presence of the anomaly is determined by the anomaly determination unit.

According to the aspect of the above (6), the degree of contribution to the evaluation index is obtained with respect to the plurality of event intervals included in the analysis target data, so that the anomaly factor can be suitably identified based on the event interval having a high degree of contribution.

(7) In another aspect, in the aspect of any one of the above (1) to (6),

the second event is issued on a condition that a predetermined period has elapsed after the first event is issued.

According to the aspect of the above (7), it is possible to suitably determine the anomaly in the facility in which the second event is issued after a predetermined period from the first event has elapsed.

(8) In another aspect, in the aspect of any one of the above (1) to (7),

the anomaly determination device of a facility further includes a display unit (105) that displays the event interval, the at least one piece of process data, and the evaluation index.

According to the aspect of the above (8), the event interval, the process data, and the evaluation index related to the anomaly determination are displayed, so that the operator of the present device can easily grasp the situation of the facility.

(9) In another aspect, in the aspect of any one of the above (1) to (8),

the event interval is obtained based on the first event and the second event which are respectively acquired from different devices provided in the facility.

According to the aspect of the above (9), the event interval is obtained based on the first event and the second event acquired from different devices provided in the facility that is the anomaly determination target.

(10) A facility anomaly determination method according to an aspect is an anomaly determination method of a facility in which a plurality of events are issued in order, the method including:

a step of acquiring an event interval (EI1) with respect to a first event (E1) and a second event (E2) included in the plurality of events;
a step of acquiring at least one piece of process data (Pd) of the facility;
a step of calculating an evaluation index (MD) of a degree of similarity to normal data with respect to analysis target data including the event interval and the process data; and
a step of determining presence or absence of anomaly of the facility by comparing the evaluation index with a threshold value (MDref) set in advance.

According to the aspect of the above (10), at least one piece of process data is acquired with respect to the facility that is an anomaly determination target, and an event interval is acquired with respect to the first event and the second event among the plurality of events that are issued in order with respect to the facility. At least one piece of process data and the event interval are handled as the analysis target data and are used to calculate the evaluation index of the degree of similarity to the normal data. In this way, by comparing the evaluation index calculated based on the event interval together with the process data with the threshold value, it is possible to perform the anomaly determination that takes into account the influence between events issued as a sequence.

(11) A facility anomaly determination program according to an aspect is an anomaly determination program of a facility in which a plurality of events are issued in order, the program causing a computer to execute:

a step of acquiring an event interval (EI1) with respect to a first event (E1) and a second event (E2) included in the plurality of events;
a step of acquiring at least one piece of process data (Pd) of the facility;
a step of calculating an evaluation index (MD) of a degree of similarity to normal data with respect to analysis target data including the event interval and the process data; and
a step of determining presence or absence of anomaly of the facility by comparing the evaluation index with a threshold value (MDref) set in advance.

According to the aspect of the above (11), at least one piece of process data is acquired with respect to the facility that is an anomaly determination target, and an event interval is acquired with respect to the first event and the second event among the plurality of events that are issued in order with respect to the facility. At least one piece of process data and the event interval are handled as the analysis target data and are used to calculate the evaluation index of the degree of similarity to the normal data. In this way, by comparing the evaluation index calculated based on the event interval together with the process data with the threshold value, it is possible to perform the anomaly determination that takes into account the influence between events issued as a sequence.

(12) A facility anomaly determination system according to an aspect is an anomaly determination system which includes an anomaly determination device of a facility in which a plurality of events are issued in order and an information processing device, the system including:

an event interval acquisition unit that acquires an event interval with respect to a first event and a second event included in the plurality of events according to a request from the information processing device;
a process data acquisition unit that acquires at least one piece of process data of the facility;

an evaluation index calculation unit that calculates an evaluation index of a degree of similarity to normal data with respect to analysis target data including the event interval and the process data; and

an anomaly determination unit that determines presence or absence of anomaly of the facility by comparing the evaluation index with a threshold value set in advance.

According to the aspect of the above (12), at least one piece of process data is acquired with respect to the facility that is an anomaly determination target according to a request from the information processing device, and an event interval is acquired with respect to the first event and the second event among the plurality of events that are issued in order with respect to the facility. At least one piece of process data and the event interval are handled as the analysis target data and are used to calculate the evaluation index of the degree of similarity to the normal data. In this way, by comparing the evaluation index calculated based on the event interval together with the process data with the threshold value, it is possible to perform the anomaly determination that takes into account the influence between events issued as a sequence.

(13) A control method for a facility anomaly determination system according to an aspect is a control method for an anomaly determination system which includes an anomaly determination device of a facility in which a plurality of events are issued in order and an information processing device, in the control method, the anomaly determination device executes:

an event interval acquisition step of acquiring an event interval with respect to a first event and a second event included in the plurality of events according to a request from the information processing device;

a process data acquisition step of acquiring at least one piece of process data of the facility;

an evaluation index calculation step of calculating an evaluation index of a degree of similarity to normal data with respect to analysis target data including the event interval and the process data; and

an anomaly determination step of determining presence or absence of anomaly of the facility by comparing the evaluation index with a threshold value set in advance.

According to the aspect of the above (13), at least one piece of process data is acquired with respect to the facility that is an anomaly determination target according to a request from the information processing device, and an event interval is acquired with respect to the first event and the second event among the plurality of events that are issued in order with respect to the facility. At least one piece of process data and the event interval are handled as the analysis target data and are used to calculate the evaluation index of the degree of similarity to the normal data. In this way, by comparing the evaluation index calculated based on the event interval together with the process data with the threshold value, it is possible to perform the anomaly determination that takes into account the influence between events issued as a sequence.

Reference Signs List

1: integrated coal gasifier power generation facility
2: powder fuel supply apparatus
4: gasifier
6: gas turbine
8: generator
10: pulverized coal
11: pulverized coal bin
12-1, 12-2, ...: discharge pipe
14-1, 14-2, ...: hopper
16-1, 16-2, ...: transport pipe
17-1, 17-2, ...: nitrogen supply pipe
18-1, 18-2, ...: transport pipe seal nitrogen shut-off valve
20-1, 20-2, ...: first limit switch
22-1, 22-2, ...: hopper outlet shut-off valve
24-1, 24-2, ...: second limit switch
100: anomaly determination device
101: event registration unit
102: evaluation criterion storage unit
103: evaluation index calculation unit
104: evaluation unit
105: display unit
106: event interval acquisition unit
107: process data acquisition unit
108: event interval acquisition unit
109: process data acquisition unit
110: anomaly determination unit
111: factor identification unit
200: anomaly determination system
202: information processing device
A, B, ...: supply system
E1: first event
E2: second event
EI1: first event interval
MD: Mahalanobis distance
MDref: threshold value
Pd: process data

**Claims**

1.  An anomaly determination device of a facility in which a plurality of events are issued in order, the anomaly determination device comprising:

an event interval acquisition unit that acquires an event interval with respect to a first event and a second event included in the plurality of events;

a process data acquisition unit that acquires at least one piece of process data of the facility;

an evaluation index calculation unit that calculates an evaluation index of a degree of similarity to normal data with respect to analysis target data including the event interval and the process data; and

an anomaly determination unit that determines presence or absence of anomaly of the facility by comparing the evaluation index with a threshold value set in advance.

2. The anomaly determination device of a facility according to Claim 1, further comprising:

an event registration unit that registers the plurality of events,

wherein the event interval acquisition unit acquires the event interval with respect to the first event and the second event included in the plurality of events registered in the event registration unit.

3. The anomaly determination device of a facility according to Claim 1 or 2,
wherein the normal data includes the event interval and the process data acquired in a period in which the facility is operated normally.

4. The anomaly determination device of a facility according to Claim 1 or 2,
wherein the analysis target data does not include a period in which the process data deviates from an allowable range set in advance.

5. The anomaly determination device of a facility according to Claim 1 or 2,

wherein the event interval acquisition unit acquires a plurality of the event intervals corresponding to different combinations of the first event and the second event, and
the analysis target data includes the plurality of event intervals.

6. The anomaly determination device of a facility according to Claim 5, further comprising:
a factor identification unit that identifies a factor of the anomaly, based on a degree of contribution to the evaluation index in a case where presence of the anomaly is determined by the anomaly determination unit.

7. The anomaly determination device of a facility according to Claim 1 or 2,
wherein the second event is issued on a condition that a predetermined period has elapsed after the first event is issued.

8. The anomaly determination device of a facility according to Claim 1 or 2, further comprising:
a display unit that displays the event interval, the at least one piece of process data, and the evaluation index.

9. The anomaly determination device of a facility according to Claim 1 or 2,
wherein the event interval is obtained based on the first event and the second event which are respectively acquired from different devices provided in the facility.

10. An anomaly determination method of a facility in which sequence control is performed to issue a plurality of events in order, the method comprising:

a step of acquiring an event interval with respect to a first event and a second event included in the plurality of events;
a step of acquiring at least one piece of process data of the facility;
a step of calculating an evaluation index of a degree of similarity to normal data with respect to analysis target data including the event interval and the process data; and
a step of determining presence or absence of anomaly of the facility by comparing the evaluation index with a threshold value set in advance.

11. An anomaly determination program of a facility in which a plurality of events are issued in order, the program causing a computer to execute:

a step of acquiring an event interval with respect to a first event and a second event included in the plurality of events;
a step of acquiring at least one piece of process data of the facility;
a step of calculating an evaluation index of a degree of similarity to normal data with respect to analysis target data including the event interval and the process data; and
a step of determining presence or absence of anomaly of the facility by comparing the evaluation index with a threshold value set in advance.

12. An anomaly determination system of a facility, which includes an anomaly determination device of the facility in which a plurality of events are issued in order and an information processing device, the system comprising:

an event interval acquisition unit that acquires an event interval with respect to a first event and a second event included in the plurality of events according to a request from the information processing device;

a process data acquisition unit that acquires at least one piece of process data of the facility;

an evaluation index calculation unit that calculates an evaluation index of a degree of similarity to normal data with respect to analysis target data including the event interval and the process data; and

an anomaly determination unit that determines presence or absence of anomaly of the facility by comparing the evaluation index with a threshold value set in advance.

13. A control method for an anomaly determination system of a facility, which includes an anomaly determination device of the facility in which a plurality of events are issued in order and an information processing device, in the control method,
the anomaly determination device executes:

an event interval acquisition step of acquiring an event interval with respect to a first event and a second event included in the plurality of events according to a request from the information processing device;

a process data acquisition step of acquiring at least one piece of process data of the facility;

an evaluation index calculation step of calculating an evaluation index of a degree of similarity to normal data with respect to analysis target data including the event interval and the process data; and

an anomaly determination step of determining presence or absence of anomaly of the facility by comparing the evaluation index with a threshold value set in advance.

# FIG. 1

# FIG. 2

```
┌─────────────┐
│    START    │
└─────────────┘
       │
       ▼
┌──────────────────────────────────────┐
│  OPEN TRANSPORT PIPE SEAL NITROGEN    │
│            SHUT-OFF VALVE             │──── S100
│        (ISSUE FIRST EVENT E1)         │
└──────────────────────────────────────┘
       │ YES
       ▼
┌──────────────────────────────────────┐
│  CLOSE HOPPER OUTLET SHUT-OFF VALVE   │──── S101
│        (ISSUE SECOND EVENT E2)        │
└──────────────────────────────────────┘
       │ YES
       ▼
┌──────────────────────────────────────┐
│     ISSUE FIRST EVENT INTERVAL EI1    │──── S102
└──────────────────────────────────────┘
       │
       ▼
┌─────────────┐
│     END     │
└─────────────┘
```

# FIG. 3

TRANSPORT PIPE SEAL
NITROGEN SHUT-OFF VALVE

100% (FULLY OPEN)

0% (FULLY CLOSED)

FIRST LIMIT SWITCH FULLY OPEN

ON

OFF

FIRST LIMIT SWITCH FULLY CLOSED

ON

OFF

HOPPER OUTLET SHUT-OFF VALVE

100% (FULLY OPEN)

0% (FULLY CLOSED)

SECOND LIMIT SWITCH OPEN

ON

OFF

SECOND LIMIT SWITCH CLOSED

ON

OFF

$E1$  $EI1$  $E2$  $Tn$  $tn1$  $tn2$  $Th$  $th1$  $th2$

EP 4 506 768 A1

# FIG. 4

## FIG. 5

# FIG. 6A

START

↓

REGISTER EVENT — S200

↓

IDENTIFY FIRST EVENT AND SECOND EVENT — S201

↓

ACQUIRE FIRST EVENT INTERVAL — S202

↓

ACQUIRE PROCESS DATA — S203

↓

CALCULATE EVALUATION CRITERION (DETERMINATION THRESHOLD VALUE OF MAHALANOBIS DISTANCE) — S204

↓

END

# FIG. 6B

```
                    ┌─────────────┐
                    │    START    │
                    └──────┬──────┘
                           │
                           ▼
        ┌──────────────────────────────────┐
        │  ACQUIRE FIRST EVENT INTERVAL     │~S300
        │  BASED ON EVENT REGISTRATION UNIT │
        └──────────────────┬───────────────┘
                           │
                           ▼
        ┌──────────────────────────────────┐
        │      ACQUIRE PROCESS DATA         │~S301
        └──────────────────┬───────────────┘
                           │
                           ▼
        ┌──────────────────────────────────┐
        │    CALCULATE EVALUATION INDEX     │~S302
        │     (MAHALANOBIS DISTANCE)        │
        └──────────────────┬───────────────┘
                           │        S303
                           ▼
                    ╱─────────────╲                    NO
                  ╱   EVALUATION    ╲────────────────────────┐
                 ╲ INDEX > THRESHOLD ╱                        │
                   ╲    VALUE?      ╱                         │
                     ╲───────────╱                           │
                        │ YES                                │
                        ▼                                    ▼
        ┌──────────────────────────┐        ┌──────────────────────────┐
        │   "THERE IS ANOMALY"     │~S304   │     "NO ANOMALY"         │~S306
        │     DETERMINATION        │        │     DETERMINATION        │
        └──────────┬───────────────┘        └──────────┬───────────────┘
                   │                                    │
                   ▼                                    │
        ┌──────────────────────────┐                   │
        │   IDENTIFY ANOMALY FACTOR │~S305              │
        └──────────┬───────────────┘                   │
                   │◄──────────────────────────────────┘
                   ▼
        ┌──────────────────────────┐
        │ OUTPUT DETERMINATION RESULT│~S307
        └──────────┬───────────────┘
                   │
                   ▼
            ┌─────────────┐
            │     END     │
            └─────────────┘
```

21

FIG. 7

# FIG. 8

SN RATIO CONTRIBUTION RATE [%]

FIG. 9

## INTERNATIONAL SEARCH REPORT

| International application No. |
| --- |
| **PCT/JP2023/016650** |

### A. CLASSIFICATION OF SUBJECT MATTER

***G05B 23/02***(2006.01)i
FI:   G05B23/02 302Y

According to International Patent Classification (IPC) or to both national classification and IPC

### B. FIELDS SEARCHED

Minimum documentation searched (classification system followed by classification symbols)

G05B23/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2005-216148 A (YAMATAKE CORP) 11 August 2005 (2005-08-11)<br>in particular, paragraphs [0005], [0030], [0036], [0039], [0047], [0049], [0050], [0059], [0061], fig. 1, 6, 7, 11 | 1-13 |
| Y | JP 2002-062912 A (DENNOO KK) 28 February 2002 (2002-02-28)<br>in particular, paragraph [0041] | 1-13 |
| Y | JP 2019-023771 A (MITSUBISHI ELECTRIC CORP) 14 February 2019 (2019-02-14)<br>in particular, paragraphs [0009], [0015], [0023] | 1-13 |
| Y | JP 2020-061067 A (MITSUBISHI HITACHI POWER SYSTEMS, LTD.) 16 April 2020 (2020-04-16)<br>in particular, paragraph [0027] | 3 |
| A | JP 57-132208 A (HITACHI LTD) 16 August 1982 (1982-08-16)<br>entire text, all drawings | 1-13 |

☐ Further documents are listed in the continuation of Box C.     ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 May 2023** | **13 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/016650**

| Patent document cited in search report | | | Publication date (day/month/year) | Patent family member(s) | | | Publication date (day/month/year) |
|---|---|---|---|---|---|---|---|
| JP | 2005-216148 | A | 11 August 2005 | (Family: none) | | | |
| JP | 2002-062912 | A | 28 February 2002 | US | 2001/0049562 | A1 | |
| | | | | in particular, paragraph [0056] | | | |
| JP | 2019-023771 | A | 14 February 2019 | WO | 2017/104305 | A1 | |
| JP | 2020-061067 | A | 16 April 2020 | WO | 2020/075819 | A1 | |
| | | | | TW | 202030566 | A | |
| JP | 57-132208 | A | 16 August 1982 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022085339 A

- JP 5538597 B